# EUROPÄISCHE PATENTANMELDUNG

(11) **EP 3 624 314 A1**
(43) Veröffentlichungstag der Anmeldung: **18.03.2020**
(21) Anmeldenummer: 18194860.5
(22) Anmeldetag: 17.09.2018
(51) Int. Cl.: H02K 15/04, H02K 15/06

(54) **EINZIEHEN VON WICKLUNGEN IN EIN STATORBLECHPAKET**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)

(57) **Zusammenfassung**

Die Erfindung betrifft ein Einziehverfahren für ein Statorwicklungssystem einer elektrischen Maschine (1) in ein Statorblechpaket (3) der elektrischen Maschine (1) und ein entsprechendes Wickelwerkzeug (13), mittels derer es möglich ist, auf einfache Weise eine entsprechende elektrische Maschine (1) herzustellen, bei der das Statorblechpaket (3) eine Anzahl von Statornuten (7) aufweist, die parallel zu einer Rotationsachse (6) der elektrischen Maschine verlaufen, kreisförmig um die Rotationsachse (6) herum verteilt angeordnet sind und zur Rotationsachse (6) hin offen sind, an ihrem der Rotationsachse (6) zugewandten Ende aber einen gegenüber der übrigen Statornut (7) verjüngten Spaltbereich (8) aufweisen, weiterhin in den Statornuten (7) die Wicklungen (9) des Statorwicklungssystems angeordnet sind und Wicklungsköpfe (11) des Statorwicklungssystems in Richtung der Rotationsachse (6) gesehen an den beiden axialen Enden des Statorblechpakets (3) über das Statorblechpaket (3) hinausragen und zusätzlich erfindungsgemäß die Wicklungen (9) in den Statornuten (7) als gelegte Wicklungen ausgebildet sind und das Statorblechpaket (3) an seinen beiden axialen Enden keine Führungsstrukturen aufweist, mittels derer die einzelnen Windungen (10) der Wicklungen (9) geführt werden könnten.

## Beschreibung

Die vorliegende Erfindung geht aus von einem Einziehverfahren für ein Statorwicklungssystem einer elektrischen Maschine in ein Statorblechpaket der elektrischen Maschine,
- wobei das Statorblechpaket eine Anzahl von Statornuten aufweist, die parallel zu einer Rotationsachse der elektrischen Maschine verlaufen, kreisförmig um die Rotationsachse herum verteilt angeordnet sind und zur Rotationsachse hin offen sind, an ihrem der Rotationsachse zugewandten Ende aber einen gegenüber der übrigen Statornut verjüngten Spaltbereich aufweisen.

Die vorliegende Erfindung betrifft weiterhin ein Wickelwerkzeug für ein Statorwicklungssystem einer elektrischen Maschine.

Die vorliegende Erfindung geht weiterhin aus von einer elektrischen Maschine,
- wobei die elektrische Maschine ein Statorblechpaket aufweist,
- wobei das Statorblechpaket eine Anzahl von Statornuten aufweist, die parallel zu einer Rotationsachse der elektrischen Maschine verlaufen, kreisförmig um die Rotationsachse herum verteilt angeordnet sind und zur Rotationsachse hin offen sind, an ihrem der Rotationsachse zugewandten Ende aber einen gegenüber der übrigen Statornut verjüngten Spaltbereich aufweisen,
- wobei in den Statornuten die Wicklungen eines Statorwicklungssystems angeordnet sind,
- wobei Wicklungsköpfe des Statorwicklungssystems in Richtung der Rotationsachse gesehen an den beiden axialen Enden des Statorblechpakets über das Statorblechpaket hinausragen.

Eine elektrische Maschine weist unter anderem einen Stator auf, der in der Regel als geschichtetes Blechpaket ausgebildet ist. Bei der üblichen Ausgestaltung der elektrischen Maschine als rotatorische elektrische Maschine mit einem Innenrotor sind die Statornuten nach radial innen, also auf die Rotationsachse zu, offen. Zumindest an ihrem radial inneren Ende weisen die Statornuten jedoch einen gegenüber der übrigen Statornut verjüngten Spaltbereich auf. Aus rein elektromagnetischer Sicht sollte sich die Statornut so weit wie möglich verjüngen. Aus fertigungstechnischen Gründen muss jedoch eine hinreichend große Nutweite verbleiben, da anderenfalls die Wicklungen des Statorwicklungssystems nicht in die Statornuten eingebracht werden könnten.

Für die Herstellung der Wicklungen des Statorwicklungssystems und das Einbringen der Wicklungen in das Statorblechpaket sind verschiedene Vorgehensweisen bekannt.

So ist beispielsweise bekannt, die Windungen der Wicklungen (also die einzelnen Leiterschleifen der Wicklungen) auf eine Schablone zu wickeln und im Anschluss daran die Wicklungen über die Nutspalte in die Statornuten einzubringen. Bei dieser Vorgehensweise wird nur einer der Wicklungsköpfe in definierter Weise gehalten. Der Hauptteil der Wicklungen und der andere Wicklungskopf liegen unkontrolliert außerhalb der Schablone. Beim Einziehen der jeweiligen Wicklung in die jeweilige Statornut kann jedoch eine definierte Anordnung der einzelnen Windungen nicht gewährleistet werden. Es entsteht vielmehr eine sogenannte wilde Wicklung, bei welcher Überkreuzungen der einzelnen Windungen in Kauf genommen werden. Dies führt zum einen zu einem Verlust im Füllgrad in der Statornut. Zum anderen kann dies zu erhöhten elektrischen Spannungen zwischen in der jeweiligen Statornut nebeneinander angeordneten Windungen führen. Weiterhin sind zum Einziehen hohe Kräfte erforderlich. Im Einzelfall ist es sogar möglich, dass die Drahtisolierung der Windungen geschwächt oder beschädigt wird. Bestrebungen, durch Beschichtungen die Oberflächen der Windungen glatter zu machen und dadurch die Reibungskräfte herabzusetzen, haben sich als erfolglos erwiesen. Insbesondere bringen sie den Nachteil mit sich, dass die Imprägnierung des Stators deutlich verschlechtert wird.

Bei einer sogenannten gelegten Wicklung wird eine definierte Anordnung der einzelnen Windungen erreicht. Insbesondere liegen die einzelnen Windungen parallel nebeneinander. Dadurch kann zum einen der Füllgrad der Statornut maximiert werden. Zum anderen können elektrische Spannungen zwischen in der jeweiligen Statornut nebeneinander angeordneten Windungen minimal gehalten werden. Um in den Statornuten gelegte Wicklungen zu erreichen, ist es im Stand der Technik jedoch erforderlich, die einzelnen Windungen mittels eines Nadelwicklers direkt in das Statorblechpaket zu wickeln. Dies ist erheblich aufwendiger und teurer.

Die Aufgabe der vorliegenden Erfindung besteht darin, Möglichkeiten zu schaffen, mittels derer auf einfache, zuverlässige und darüber hinaus kostengünstige Art und Weise die Nachteile des Standes der Technik vermieden werden können.

Die Aufgabe wird zunächst durch ein Einziehverfahren mit den Merkmalen des Anspruchs 1 gelöst. Vorteilhafte Ausgestaltungen des Einziehverfahrens sind Gegenstand der abhängigen Ansprüche 2 bis 4.

Erfindungsgemäß wird ein Einziehverfahren geschaffen,
- wobei die Wicklungen einer Anzahl von Phasen des Statorwicklungssystems auf ein Wickelwerkzeug gewickelt werden,
- wobei das Wickelwerkzeug Werkzeugnuten zumindest für die Wicklungen einer Anzahl von Phasen aufweist,
- wobei die Werkzeugnuten parallel zu einer Werkzeugachse des Wickelwerkzeugs verlaufen, kreisförmig um die Werkzeugachse herum verteilt angeordnet sind und zur Werkzeugachse hin geschlossen sind,
- wobei die Werkzeugnuten Bestandteil eines Mantelteils des Wickelwerkzeugs sind,
- wobei das Wickelwerkzeug weiterhin ein erstes und ein zweites Stirnteil aufweist, die radial zur Werkzeugachse gesehen vollständig innerhalb des Mantelteils angeordnet sind und, von dem Mantelteil geführt, in dem Mantelteil in Richtung der Werkzeugachse verschiebbar sind,
- wobei die beiden Stirnteile in Richtung der Werkzeugachse gesehen um eine Verkürzungsstrecke gegeneinander verschiebbar sind, so dass sie in Richtung der Werkzeugachse gesehen zwischen einem kleineren und einem größeren Abstand voneinander verschiebbar sind,
- wobei die Wicklungen der Anzahl von Phasen beim Wickeln auf das Wickelwerkzeug als gelegte Wicklungen gewickelt werden, während die beiden Stirnteile den größeren Abstand voneinander aufweisen,
- wobei beim Wickeln der Wicklungen die späteren Wicklungsköpfe der Wicklungen durch Führungsflächen der Stirnteile radial innerhalb des Mantelelements gehalten werden,
- wobei die Wicklungen in einem Übergangsabschnitt von den in den Werkzeugnuten angeordneten Abschnitten der Wicklungen zu den durch das erste Stirnteil gehaltenen Wicklungsköpfen durch Führungselemente des ersten Stirnteils derart geführt werden, dass sie in Tangentialrichtung um die Werkzeugachse herum gesehen sich über einen geringeren Winkel erstrecken als im Bereich des Mantelteils,
- wobei das Wickelwerkzeug mit den darauf befindlichen Wicklungen derart angeordnet wird, dass die Werkzeugachse mit der Rotationsachse fluchtet, die Werkzeugnuten sich in Radialrichtung und Tangentialrichtung an den gleichen Stellen befinden wie diejenigen der Statornuten, in welche die auf das Wickelwerkzeug gewickelten Wicklungen eingebracht werden sollen, und das erste Stirnteil in das Statorblechpaket hineinragt,
- wobei in diesem Zustand die Stirnteile in Richtung der Werkzeugachse verschoben werden,
- wobei zunächst die beiden Stirnteile relativ zueinander verschoben werden, so dass sie nach dem Verschieben den kleineren Abstand voneinander aufweisen, und während des Verschiebens der beiden Stirnteile relativ zueinander das zweite Stirnteil sich von den auf das zweite Stirnteil gewickelten Wicklungsköpfen löst,
- wobei sodann das erste Stirnteil in Richtung der Rotationsachse durch das Statorblechpaket hindurch geschoben wird und durch das Schieben der Stirnteile
   -- die Wicklungen als gelegte Wicklungen in die entsprechenden Statornuten eingezogen werden, wobei die Wicklungen sich während des Einziehvorgangs mit ihren Übergangsabschnitten in den Spaltbereichen der Statornuten befinden, und
   -- die vom zweiten Stirnteil gelösten Wicklungsköpfe durch am Mantelteil angeordnete Führungsschrägen nach radial außen geführt werden und sodann radial außen am Mantelteil entlang auf das Statorblechpaket zu gleiten,
- wobei sodann mit oder ohne Überführen der beiden Stirnteile in den größeren Abstand zueinander das erste Stirnteil durch das Statorblechpaket zurückgezogen wird,
- wobei das erste Stirnteil sich vor oder während des Zurückziehens von den auf das erste Stirnteil gewickelten Wicklungsköpfen löst,
- wobei die vom ersten Stirnteil gelösten Wicklungsköpfe nach radial außen umgebogen werden.

Dadurch werden zunächst beim Herstellen der Wicklungen als solches die Wicklungen von radial außen auf das Wickelwerkzeug aufgebracht. Das Herstellen von gelegten Wicklungen ist dadurch ohne weiteres möglich. Das Einziehen in das Statorblechpaket ist ebenfalls auf einfache Weise möglich. Es muss lediglich beachtet werden, dass die Werkzeugnuten des Wickelwerkzeugs in Anordnung und Gestalt mit den Statornuten des Statorblechpakets korrespondieren. Sie sind sozusagen die gleichartigen Gegenstücke zu den Statornuten mit dem Unterschied, dass sie nach radial außen hin und nicht nach radial innen hin offen sind. Im Bereich der Nutspalte sind die Wicklungen entsprechend der Weite der Nutspalte verjüngt, so dass das Führen der Wicklungen im Bereich der Nutspalte ebenfalls keine Probleme hervorruft.

In einer bevorzugten Ausgestaltung sind die Führungsflächen des ersten Stirnteils in einem Grundteil des ersten Stirnteils axial verschiebbar gelagert, so dass sie zwischen einer ersten Stellung, in welcher sie in Richtung der Werkzeugachse gesehen aus dem Grundelement axial herausragen, und einer zweiten Stellung, in welcher sie in Richtung der Werkzeugachse gesehen in das Grundelement zurückgezogen sind, verschoben werden können. Dadurch ist es möglich, die Führungsflächen nach dem Schieben des ersten Stirnteils durch das Statorblechpaket hindurch von der ersten in die zweite Stellung zu überführen und dadurch die dortigen Wicklungsköpfe noch vor dem Zurückziehen des ersten Stirnteils von dem ersten Stirnteil freizugeben, so dass sie nach radial außen umgebogen werden können.

In einer besonders bevorzugten Ausgestaltung sind in dem Grundkörper weiterhin Schiebeelemente radial verschiebbar gelagert, so dass sie zwischen einer ersten Stellung, in welcher sie orthogonal zur Werkzeugachse gesehen in das Grundelement zurückgezogen sind, und einer zweiten Stellung, in welcher sie orthogonal zur Werkzeugachse gesehen aus dem Grundelement radial herausragen, verschoben werden können. In diesem Fall ist es möglich, die zunächst auf die Führungsflächen des ersten Stirnteils gewickelten Wicklungsköpfe mittels der Schiebeelemente nach radial außen umzubiegen.

Es ist denkbar, auf das Wickelwerkzeug die Wicklungen mehrerer Phasen aufzubringen und die Wicklungen dieser mehreren Phasen gleichzeitig in das Statorblechpaket einzubringen. Das Einziehen der Wicklungen in das Statorblechpaket kann jedoch dadurch erheblich vereinfacht werden, dass auf das Wickelwerkzeug jeweils nur die Wicklungen einer einzigen Phase des Statorwicklungssystems gewickelt werden und dass das erfindungsgemäße Einziehverfahren mehrmals ausgeführt wird, bis die Wicklungen aller Phasen des Statorwicklungssystems in das Statorblechpaket eingezogen sind.

Die Aufgabe wird weiterhin durch ein Wickelwerkzeug mit den Merkmalen des Anspruchs 5 gelöst. Vorteilhafte Ausgestaltung des Wickelwerkzeugs sind Gegenstand der abhängigen Ansprüche 6 bis 8.

Erfindungsgemäß wird ein Wickelwerkzeug geschaffen,
- wobei das Wickelwerkzeug Werkzeugnuten zumindest für die Wicklungen einer Anzahl von Phasen des Statorwicklungssystems aufweist,
- wobei die Werkzeugnuten parallel zu einer Werkzeugachse des Wickelwerkzeugs verlaufen, kreisförmig um die Werkzeugachse herum verteilt angeordnet sind und zur Werkzeugachse hin geschlossen sind,
- wobei die Werkzeugnuten Bestandteil eines Mantelteils des Wickelwerkzeugs sind,
- wobei das Wickelwerkzeug weiterhin ein erstes und ein zweites Stirnteil aufweist, die radial zur Werkzeugachse gesehen vollständig innerhalb des Mantelteils angeordnet sind und, von dem Mantelteil geführt, in dem Mantelteil in Richtung der Werkzeugachse verschiebbar sind,
- wobei die beiden Stirnteile in Richtung der Werkzeugachse gesehen um eine Verkürzungsstrecke gegeneinander verschiebbar sind, so dass sie in Richtung der Werkzeugachse gesehen zwischen einem kleineren und einem größeren Abstand voneinander verschiebbar sind,
- wobei die Stirnteile Führungsflächen aufweisen, mittels derer beim Wickeln der Wicklungen die späteren Wicklungsköpfe der Wicklungen radial innerhalb des Mantelelements gehalten werden,
- wobei das erste Stirnteil Führungselemente aufweist, mittels derer die Wicklungen in einem Übergangsabschnitt von den in den Werkzeugnuten angeordneten Abschnitten der Wicklungen zu den durch das erste Stirnteil gehaltenen Wicklungsköpfen derart geführt werden, dass sie in Tangentialrichtung um die Werkzeugachse herum gesehen sich über einen geringeren Winkel erstrecken als im Bereich des Mantelteils,
- wobei am Mantelteil Führungsschrägen angeordnet sind, durch welche die auf das zweite Stirnteil gewickelten Wicklungsköpfe nach dem Lösen vom zweiten Stirnteil nach radial außen geführt werden, so dass sie danach radial außen am Mantelteil entlang auf das Statorblechpaket zu gleiten können.

In einer bevorzugten Ausgestaltung sind die Führungsflächen des ersten Stirnteils in einem Grundteil des ersten Stirnteils axial verschiebbar gelagert, so dass sie zwischen einer ersten Stellung, in welcher sie in Richtung der Werkzeugachse gesehen aus einem Grundelement des ersten Stirnteils axial herausragen, und einer zweiten Stellung, in welcher sie in Richtung der Werkzeugachse gesehen in das Grundelement zurückgezogen sind, verschoben werden können. Dadurch ist es möglich, die Führungsflächen nach dem Schieben des ersten Stirnteils durch das Statorblechpaket hindurch von der ersten in die zweite Stellung zu überführen und dadurch die dortigen Wicklungsköpfe noch vor dem Zurückziehen des ersten Stirnteils von dem ersten Stirnteil freizugeben, so dass sie nach radial außen umgebogen werden können.

In einer besonders bevorzugten Ausgestaltung sind in dem Grundkörper weiterhin Schiebeelemente radial verschiebbar gelagert, so dass sie zwischen einer ersten Stellung, in welcher sie orthogonal zur Werkzeugachse gesehen in das Grundelement zurückgezogen sind, und einer zweiten Stellung, in welcher sie orthogonal zur Werkzeugachse gesehen aus dem Grundelement radial herausragen, verschoben werden können. In diesem Fall ist es möglich, die zunächst auf die Führungsflächen des ersten Stirnteils gewickelten Wicklungsköpfe mittels der Schiebeelemente nach radial außen umzubiegen.

In einer bevorzugten Ausgestaltung des Wickelwerkzeugs befinden sich die Werkzeugnuten von der Werkzeugachse ausgesehen in Tangentialrichtung in vorbestimmten ersten Winkelbereichen, zwischen denen sich zweite Winkelbereiche befinden, in denen keine Werkzeugnuten angeordnet sind. Die zweiten Winkelbereiche sind in diesem Fall größer als die ersten Winkelbereiche. Diese Ausgestaltung bewirkt, dass auf das Wickelwerkzeug jeweils nur die Wicklungen einer einzigen Phase des Statorwicklungssystems gewickelt werden können. Dadurch gestaltet sich das Einziehen der Wicklungen in das Statorblechpaket erheblich einfacher.

Die Aufgabe wird weiterhin durch eine elektrische Maschine mit den Merkmalen des Anspruchs 9 gelöst. Erfindungsgemäß ist eine elektrische Maschine der eingangs genannten Art dadurch ausgestaltet,
- dass die Wicklungen in den Statornuten als gelegte Wicklungen ausgebildet sind und
- dass das Statorblechpaket an seinen beiden axialen Enden keine Führungsstrukturen aufweist, insbesondere keine auf Endscheiben angeordnete Führungsstrukturen, mittels derer die einzelnen Windungen der Wicklungen geführt werden könnten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Schnitt durch die elektrische Maschine von FIG 1 gemäß einer Linie II-II in FIG 1,
- FIG 3: einen Schnitt durch die elektrische Maschine der FIG 1 und 2 längs einer Linie III-III in FIG 2,
- FIG 4: eine perspektivische Darstellung eines Wickelwerkzeugs,
- FIG 5: eine Frontansicht des Wickelwerkzeugs von FIG 4,
- FIG 6: einen Schnitt durch das Wickelwerkzeug von FIG 4 längs einer Linie VI-VI in FIG 5,
- FIG 7: einen Schnitt durch das Wickelwerkzeug von FIG 4 längs einer Linie VII-VII in FIG 5,
- FIG 8: ein Statorblechpaket mit aufgesetztem Wickelwerkzeug,
- FIG 9: einen Folgezustand von FIG 8,
- FIG 10: einen Folgezustand von FIG 9,
- FIG 11: einen Folgezustand von FIG 10,
- FIG 12: einen Folgezustand von FIG 11,
- FIG 13: einen Zustand analog zu FIG 11,
- FIG 14: einen Folgezustand von FIG 13,
- FIG 15: einen Folgezustand von FIG 14 und
- FIG 16: einen möglichen Folgezustand von FIG 15.

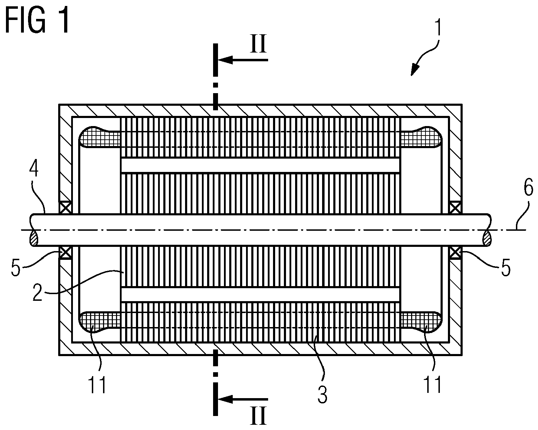

Gemäß FIG 1 weist eine rotatorische elektrische Maschine 1 einen Rotor 2 und ein Statorblechpaket 3 auf. Der Rotor 2 ist auf einer Rotorwelle 4 angeordnet. Die Rotorwelle 4 ist in Lagern 5 gelagert, so dass die Rotorwelle 4 um eine Rotationsachse 6 rotierbar ist.

Soweit nachfolgend in Bezug auf die Rotationsachse 6 die Begriffe "axial", "radial" und "tangential verwendet werden, bedeutet axial eine Richtung parallel zur Rotationsachse 6. Radial ist bezüglich der Rotationsachse 6 eine Richtung orthogonal zur entsprechenden Axialrichtung direkt auf die Rotationsachse 6 zu bzw. von ihr weg. Tangential ist bezüglich der Rotationsachse 6 eine Richtung, die sowohl orthogonal zur entsprechenden Axialrichtung als auch orthogonal zur entsprechenden Radialrichtung gerichtet ist. Tangential ist also eine Richtung, die - sofern sie auf die Rotationsachse 6 bezogen ist - bei einer konstanten Axialposition und in einem konstanten radialen Abstand von der Rotationsachse 6 kreisförmig um die Rotationsachse 6 herum gerichtet ist.

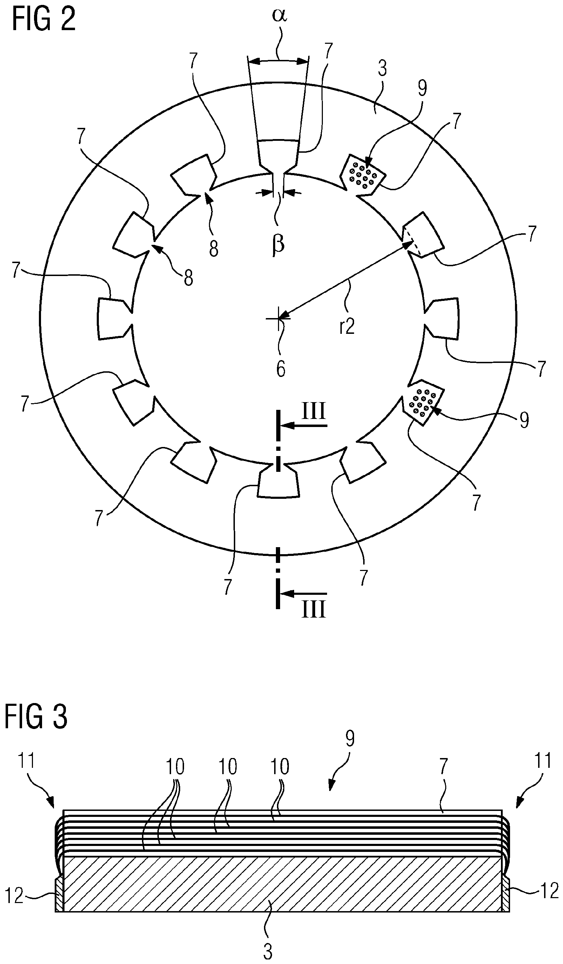

Das Statorblechpaket 3 weist - siehe insbesondere die FIG 2 und 3 - eine Anzahl von Statornuten 7 auf. Die Statornuten 7 verlaufen parallel zur Rotationsachse 6 der elektrischen Maschine 1. Sie sind kreisförmig um die Rotationsachse 6 herum verteilt angeordnet. Zur Rotationsachse 6 hin - also nach radial innen hin - sind die Statornuten 7 offen. Die Statornuten 7 erstrecken sich in Tangentialrichtung jeweils über einen Winkel a, nachfolgend als erster Nutwinkel bezeichnet. An ihrem der Rotationsachse 6 zugewandten Ende verjüngen sich die Statornuten 7 jedoch. In diesem verjüngten Bereich 8 - nachfolgend als Spaltbereich bezeichnet - erstrecken sich die Statornuten 7 lediglich über einen Winkel β, nachfolgend als erster Spaltwinkel bezeichnet. Der erste Spaltwinkel β ist kleiner als der erste Nutwinkel a.

In den Statornuten 7 sind die Wicklungen 9 eines Statorwicklungssystems angeordnet. In FIG 2 ist dies jedoch nur für ein Paar von Statornuten 7 dargestellt. In den Statornuten 7 sind die Hauptabschnitte der Wicklungen 9 angeordnet. Wicklungsköpfe 11 der Wicklungen 9 ragen gemäß FIG 1 an den beiden axialen Enden des Statorblechpakets 3 über das Statorblechpaket 3 hinaus.

In FIG 3 sind die einzelnen Windungen 10 einer der Wicklungen 9 erkennbar. Ersichtlich sind die Wicklungen 9 in den Statornuten 7 als gelegte Wicklungen ausgebildet. Die einzelnen Windungen 10 verlaufen also in den Statornuten 7 parallel und ohne sich gegenseitig zu überkreuzen.

Das Statorblechpaket 3 weist entsprechend der Darstellung in den FIG 1 bis 3 an seinen beiden axialen Enden keine Führungsstrukturen auf, mittels derer die einzelnen Windungen 10 der Wicklungen 9 geführt werden könnten. Insbesondere weist das Statorblechpaket 3 selbst keine derartigen Führungsstrukturen auf. Falls auf die beiden axialen Enden des Statorblechpakets 3 entsprechend der Darstellung in FIG 3 Endscheiben 12 aufgesetzt sein sollten, sind auch auf den Endscheiben 12 keine derartigen Führungsstrukturen vorhanden.

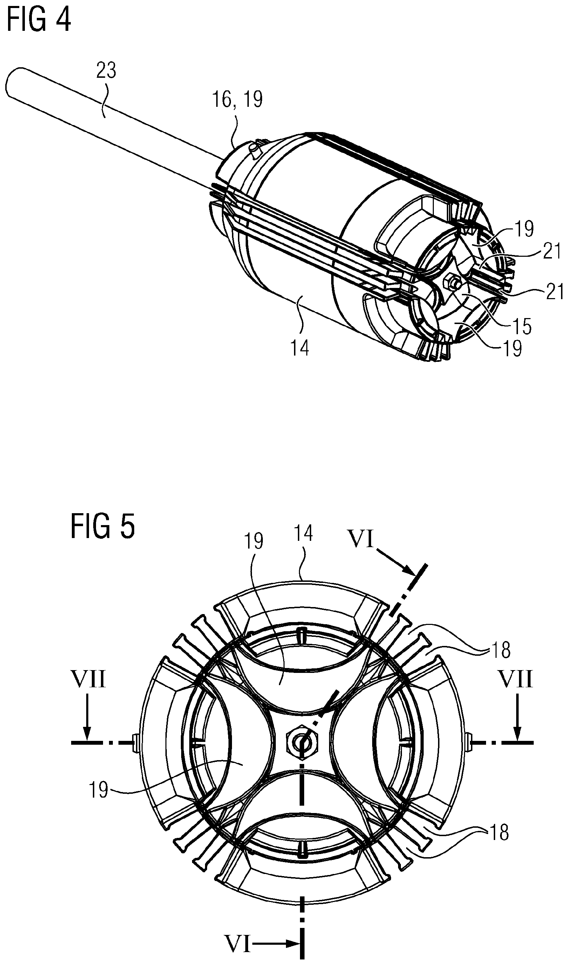

Nachfolgend wird detailliert erläutert, auf welche Art und Weise die Wicklungen 9 in das Statorblechpaket 3 als gelegte Wicklungen eingebracht werden können, obwohl an den axialen Enden des Statorblechpakets 3 keine Führungsstrukturen für die einzelnen Windungen 10 der Wicklungen 9 vorhanden sind. Insbesondere betrifft die vorliegende Erfindung ein Einziehverfahren für das Statorwicklungssystem, also ein Verfahren, mittels dessen das Statorwicklungssystem in das Statorblechpaket 3 eingezogen wird. Weiterhin betrifft die vorliegende Erfindung ein hierfür benötigtes Wickelwerkzeug 13, das nachstehend in Verbindung mit den FIG 4 bis 7 näher erläutert wird.

Gemäß den FIG 4 bis 7 besteht das Wickelwerkzeug 13 im Wesentlichen aus drei Teilen, nämlich einerseits einem Mantelteil 14 und andererseits einem ersten und einem zweiten Stirnteil 15, 16. Das Wickelwerkzeug 13 ist weiterhin im wesentlichen rotationssymmetrisch bezüglich einer Werkzeugachse 17.

Soweit nachfolgend in Bezug auf die Werkzeugachse 17 die Begriffe "axial", "radial" und "tangential" verwendet werden, bedeutet axial eine Richtung parallel zur Werkzeugachse 17. Radial ist bezüglich der Werkzeugachse 17 eine Richtung orthogonal zur entsprechenden Axialrichtung direkt auf die Werkzeugachse 17 zu bzw. von ihr weg. Tangential ist bezüglich der Werkzeugachse 17 eine Richtung, die sowohl orthogonal zur entsprechenden Axialrichtung als auch orthogonal zur entsprechenden Radialrichtung gerichtet ist. Tangential ist also eine Richtung, die - sofern sie auf die Werkzeugachse 17 bezogen ist - bei einer konstanten Axialposition und in einem konstanten radialen Abstand von der Werkzeugachse 17 kreisförmig um die Werkzeugachse 17 herum gerichtet ist.

Das Wickelwerkzeug 13 weist Nuten 18 zumindest für die Wicklungen 9 einer Anzahl von Phasen des Statorwicklungssystems auf. Diese Nuten 18 werden nachstehend zur sprachlichen Unterscheidung von den Statornuten 7 als Werkzeugnuten bezeichnet. Die Werkzeugnuten 18 verlaufen parallel zur Werkzeugachse 17. Sie sind kreisförmig um die Werkzeugachse 17 herum verteilt angeordnet und zur Werkzeugachse 17 hin - also nach radial innen hin - geschlossen. Nach radial außen sind sie offen. Die Werkzeugnuten 17 sind Bestandteil des Mantelteils 14.

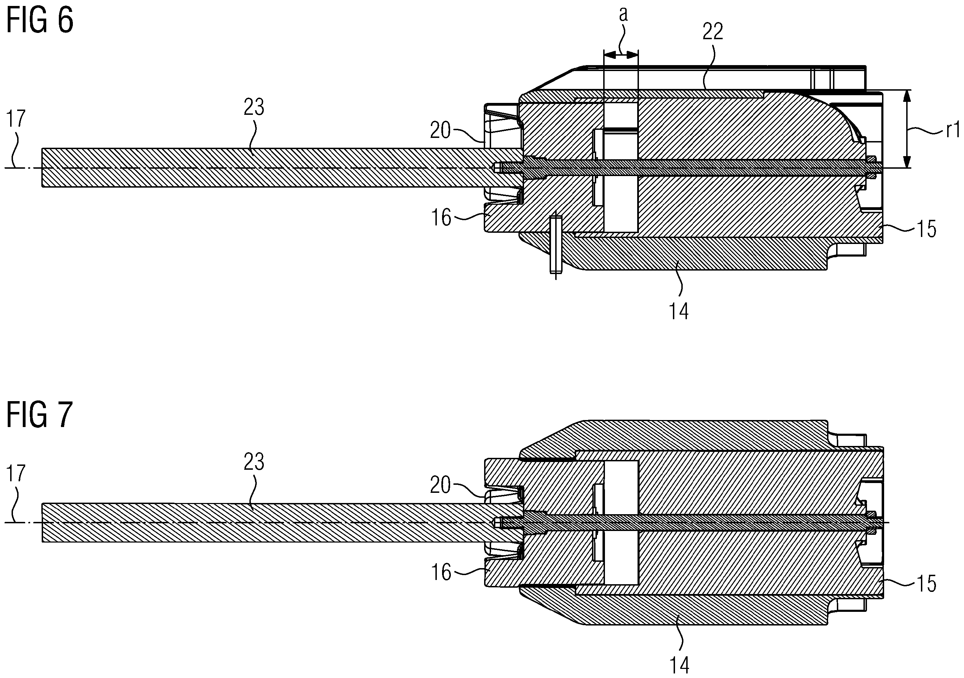

Das erste und das zweite Stirnteil 15, 16 sind radial zur Werkzeugachse 17 gesehen vollständig innerhalb des Mantelteils 14 angeordnet. Sie können jedoch in Axialrichtung über das Mantelteil 14 hinausragen. Die beiden Stirnteile 15, 16 sind in dem Mantelteil 14 axial verschiebbar. Sie werden hierbei von dem Mantelteil 14 geführt. Die beiden Stirnteile 15, 16 sind weiterhin relativ zueinander in Axialrichtung um eine Verkürzungsstrecke gegeneinander verschiebbar, so dass sie in Richtung der Werkzeugachse 17 gesehen zwischen einem kleineren Abstand und einem größeren Abstand a voneinander verschiebbar sind. Beispielsweise kann der größere Abstand a so wie in den FIG 6 und 7 dargestellt sein, während der kleinere Abstand 0 beträgt, so dass also das erste und das zweite Stirnteil 15, 16 in diesem Zustand aneinander anliegen. Vorzugsweise ist der Zustand, in dem die beiden Stirnteile 15, 16 den größeren Abstand a voneinander aufweisen, ein Ruhezustand. Der Ruhezustand ist derjenige Zustand, der angenommen wird, wenn keine äußeren Kräfte auf die beiden Stirnteile 15, 16 wirken. Er kann beispielsweise durch eine in den FIG nicht dargestellte Federeinrichtung definiert sein.

Vor dem Einziehen der Wicklungen 9 in das Statorblechpaket 3 werden zunächst die Wicklungen 9 einer Anzahl von Phasen des Statorwicklungssystems auf das Wickelwerkzeug 13 gewickelt. Während des Wickelns der Wicklungen 9 auf das Wickelwerkzeug 13 weisen die beiden Stirnteile 15, 16 den größeren Abstand a voneinander auf. Weiterhin werden die Wicklungen 9 der Anzahl von Phasen beim Wickeln auf das Wickelwerkzeug 13 als gelegte Wicklungen gewickelt. Die Windungen 10 der Wicklungen 9 werden also beim Wickeln in definierter Weise nebeneinander und übereinander gelegt, so dass die einzelnen Windungen 10 im Bereich der Werkzeugnuten 18 parallel zueinander verlaufen. Dies ist auf einfache Weise problemlos realisierbar, weil die Werkzeugnuten 18 nach radial außen hin offen sind.

Die Stirnteile 15, 16 sind, wie bereits erwähnt, radial innerhalb des Mantelteils 14 angeordnet. Sie weisen Führungsflächen 19, 20 auf. Mittels der Führungsflächen 19, 20 werden beim Wickeln der Wicklungen 9 die späteren Wicklungsköpfe 11 radial innerhalb des Mantelelements 14 gehalten. Zumindest das erste Stirnteil 15 weist weiterhin Führungselemente 21 auf. Mittels der Führungselemente 21 werden die Wicklungen 9 in einem Übergangsabschnitt derart geführt, dass sie in Tangentialrichtung um die Werkzeugachse 17 herum gesehen sich über einen geringeren Winkel γ erstrecken als im Bereich des Mantelteils 14. Der Übergangsbereich ist derjenige Abschnitt der Wicklungen 9 zwischen den in den Werkzeugnuten 18 angeordneten Abschnitten der Wicklungen 9 und den im ersten Stirnteil 15 angeordneten Wicklungsköpfen 11.

Die im Bereich des Mantelteils 14 angeordneten Abschnitte der Wicklungen 9 können sich insbesondere über einen Winkel erstrecken - nachfolgend als zweiter Nutwinkel bezeichnet -, der so groß wie der erste Nutwinkel α ist. Dieser Winkel - nachfolgend als zweiter Spaltwinkel bezeichnet - darf hingegen maximal so groß wie der erste Spaltwinkel β sein.

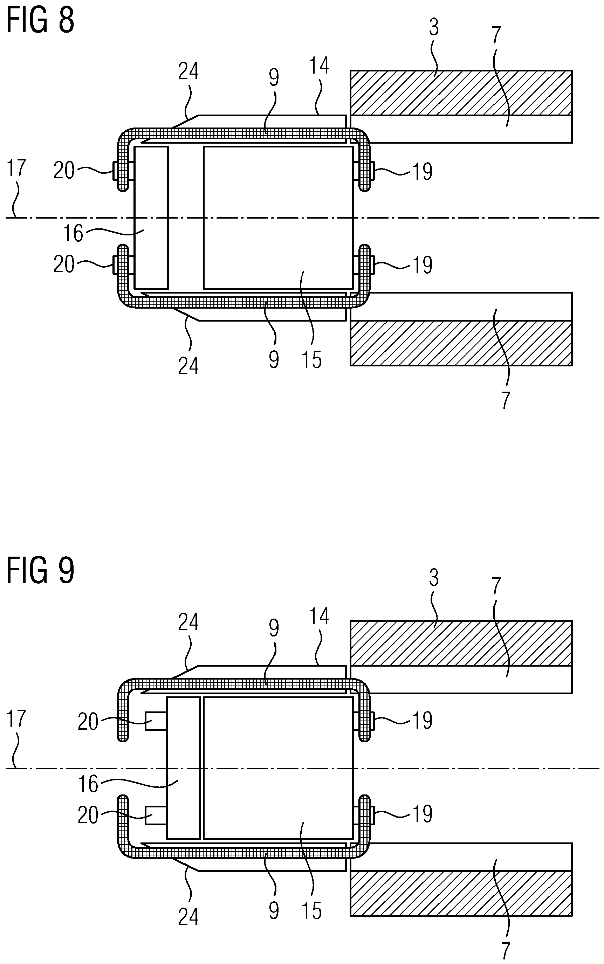

Das Wickelwerkzeug 13 ist derart ausgebildet, dass die Werkzeugnuten 18 - dies gilt sowohl für die einzelnen Werkzeugnuten 18 als solche als auch für die Verteilung der Werkzeugnuten 18 - praktisch ein Spiegelbild der Statornuten 7 darstellen. Insbesondere - siehe FIG 6 - kann ein radialer Abstand r1, welchen der Nutgrund 22 der Werkzeugnuten 18 von der Werkzeugachse 17 aufweist, mit einem radialen Abstand r2 - siehe FIG 2 - korrespondieren, bei dem die Verjüngung der Statornuten 7 beginnt. Auf die Abstimmung der Nutwinkel α und der Spaltwinkel β wurde bereits hingewiesen. Nach dem Bewickeln des Wickelwerkzeugs 13 mit den Wicklungen 9 kann das Wickelwerkzeug 13 - selbstverständlich mit den darauf befindlichen Wicklungen 9 - daher derart angeordnet werden, dass die Werkzeugachse 17 mit der Rotationsachse 6 fluchtet und die Werkzeugnuten 18 sich in Radialrichtung und Tangentialrichtung an den gleichen Stellen befinden wie diejenigen der Statornuten 7, in welche die auf das Wickelwerkzeug 13 gewickelten Wicklungen 9 eingebracht werden sollen. Beispielsweise kann ein Roboter einen Stößel 23 ergreifen und das Wickelwerkzeug 13 derart auf das Statorblechpaket 3 aufsetzen. Das erste Stirnteil 15 ragt in diesem Zustand in das Statorblechpaket 3 hinein. FIG 8 zeigt diesen Zustand.

Ausgehend von diesem Zustand werden nun - beispielsweise über den Stößel 23 - die Stirnteile 15, 16 axial verschoben. Hierbei wird zunächst das zweite Stirnteil 16 auf das erste Stirnteil 15 zu verschoben, ohne dass das erste Stirnteil 15 sich bewegt. Dieses Verschieben erfolgt, bis die beiden Stirnteile 15, 16 den kleineren Abstand voneinander aufweisen. FIG 9 zeigt diesen Zustand. Während des Verschiebens des zweiten Stirnteils 16 auf das erste Stirnteil 15 zu löst sich das zweite Stirnteil 16 entsprechend der Darstellung in FIG 9 von den auf das zweite Stirnteil 16 gewickelten Wicklungsköpfen 11. Insbesondere dringt das zweite Stirnteil 16 so weit in das Mantelteil 14 ein, dass es nicht nur radial, sondern auch axial nicht mehr über das Mantelteil 14 hinausragt. Die Führungsflächen 20 des zweiten Stirnteils 16 können die zuvor auf das zweite Stirnteil 16 gewickelten Wicklungsköpfe 11 daher nicht mehr zurückhalten. Diese Wicklungsköpfe 11 folgen somit späteren Einwirkungen auf die Wicklungsköpfe 11.

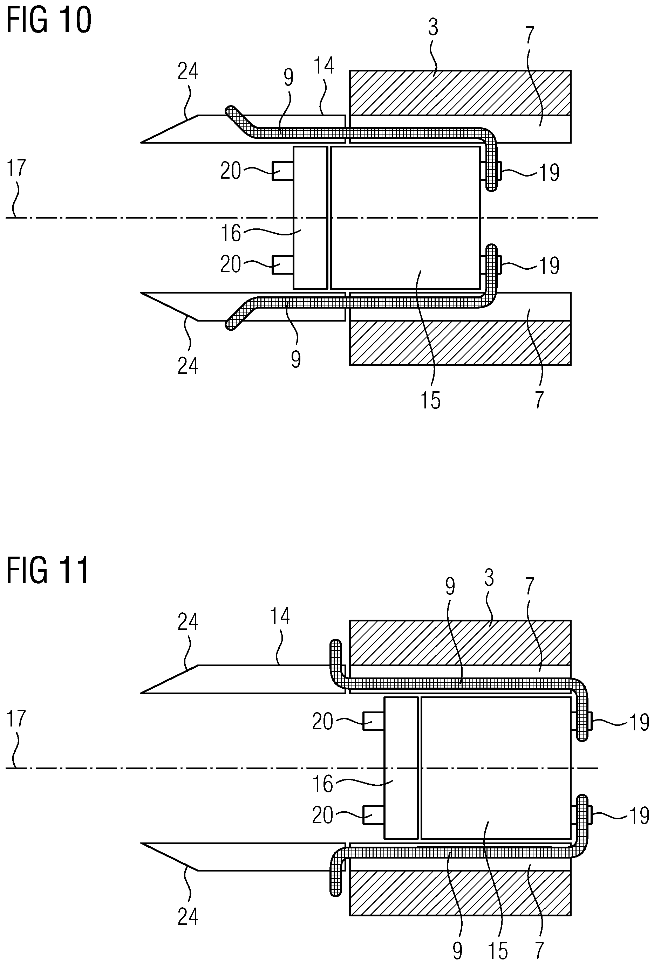

Nunmehr wird das erste Stirnteil 15 axial durch das Statorblechpaket 3 hindurch geschoben. Das zweite Stirnteil 16 folgt mit entsprechendem Abstand dieser Bewegung. FIG 10 zeigt einen Zwischenzustand während des Schiebens, FIG 11 den Endzustand, in dem also das erste Stirnteil 15 vollständig durch das Statorblechpaket 3 hindurch geschoben wurde.

Durch das Hindurchschieben des ersten Stirnteils 15 werden die Übergangsabschnitte der Wicklungen 9 in Axialrichtung entlang der Spaltbereiche der Statornuten 7 geführt. Die Hauptabschnitte der Wicklungen 9 folgen dieser Bewegung, werden jedoch direkt axial in die Statornuten 7 eingezogen. Hierbei (und hierdurch) bleibt die gelegte Wicklung erhalten. Weiterhin sind am Mantelteil 14 in dem Bereich, der vom Statorblechpaket 3 abgewandt ist, Führungsschrägen 24 angeordnet. Die vom zweiten Stirnteil 16 gelösten Wicklungsköpfe elf werden - siehe FIG 10 - durch das Schieben der Stirnteile 15, 16 durch die Führungsschrägen 24 nach radial außen geführt. Sie können daher sodann - siehe FIG 11 - radial außen am Mantelteil 14 entlang auf das Statorblechpaket 3 zu gleiten.

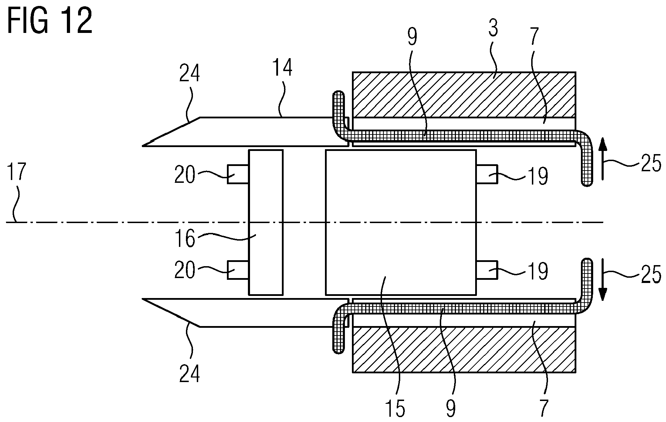

Ausgehend von dem in FIG 11 dargestellten Zustand wird sodann entsprechend der Darstellung in FIG 12 das erste Stirnteil 15 durch das Statorblechpaket 3 zurückgezogen. In der Regel werden hierbei zu Beginn des Zurückziehens die beiden Stirnteile 15, 16 wieder in den größeren Abstand a voneinander gebracht. Dies ist jedoch von untergeordneter Bedeutung. Entscheidend ist, dass sich entsprechend der Darstellung in FIG 12 das erste Stirnteil 15 während des Zurückziehens von den auf das erste Stirnteil 15 gewickelten Wicklungsköpfen 11 löst. Dadurch ist es möglich, die vom ersten Stirnteil 15 gelösten Wicklungsköpfe 11 nach radial außen umzubiegen. Der Biegevorgang ist in FIG 12 durch Pfeile 25 angedeutet. Gegebenenfalls kann auch eine zusätzliche Fixierung der vom ersten Stirnteil 15 gelösten Wicklungsköpfe 11 erfolgen. Sowohl der Biegevorgang als auch das gegebenenfalls erforderliche Fixieren können auf konventionelle Art und Weise erfolgen und müssen daher nicht näher erläutert werden.

Nunmehr werden lediglich noch die vom zweiten Stirnteil 16 gelösten Wicklungsköpfe 11 fertig umgebogen und - falls erforderlich - fixiert. Auch hier können sowohl der Biegevorgang als auch das gegebenenfalls erforderliche Fixieren auf konventionelle Art und Weise erfolgen und müssen daher nicht näher erläutert werden. Mit diesem abschließenden Vorgang sind die zuvor auf das Wickelwerkzeug 13 gewickelten Wicklungen 9 vollständig in das Statorblechpaket 3 eingebracht.

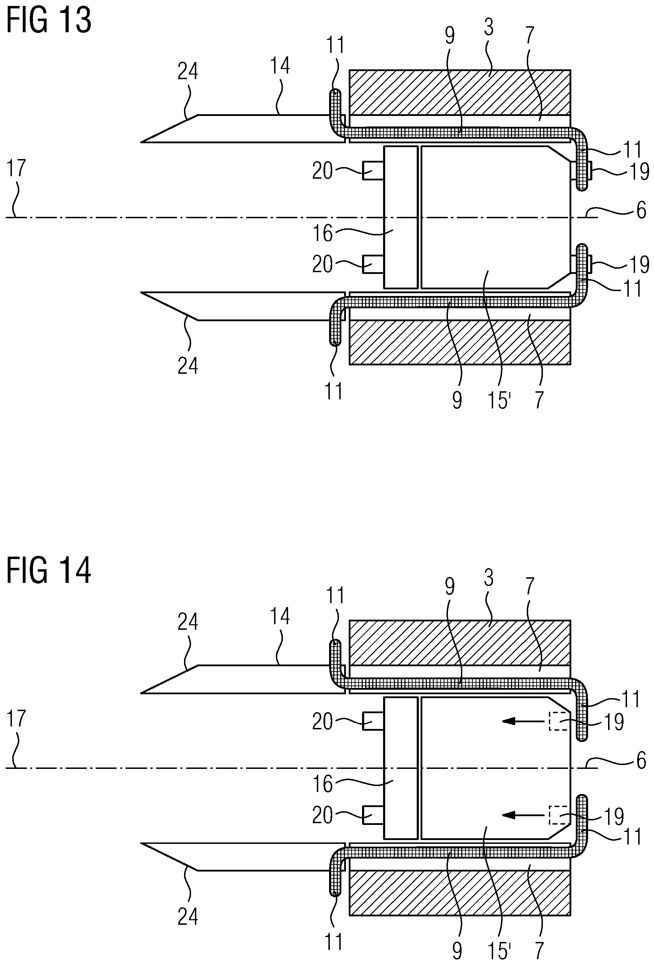

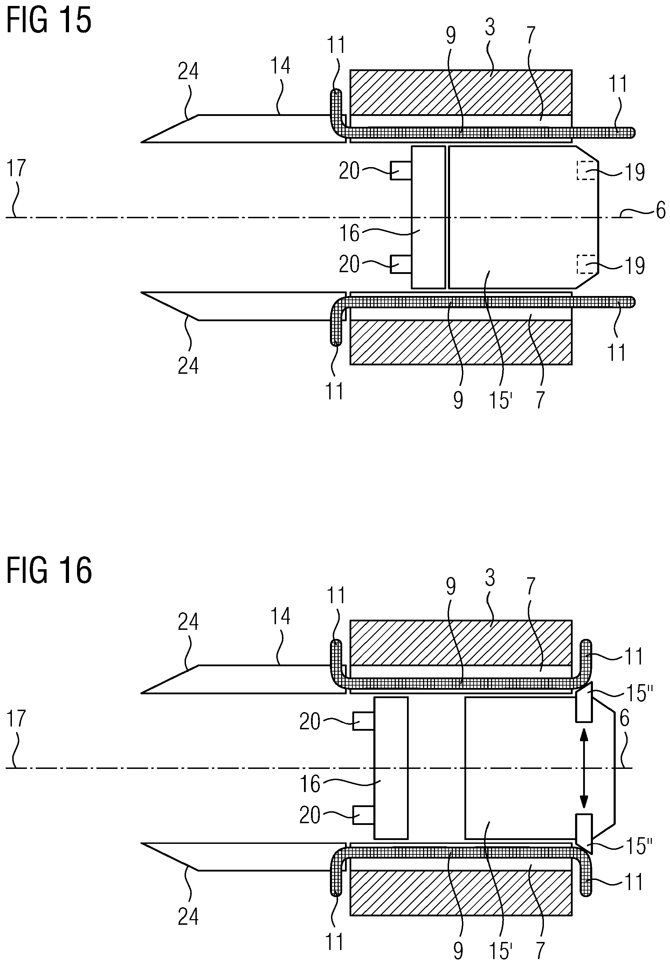

Nachfolgend werden in Verbindung mit den FIG 13 bis 15 eine mögliche Ausgestaltung des Wickelwerkzeugs 13 und eine auf dieser Ausgestaltung aufbauende Ausgestaltung des Einziehverfahrens erläutert. Sowohl das Wickelwerkzeug 13 als auch das Einziehverfahren stimmen mit der bisher erläuterten Ausgestaltung des Wickelwerkzeugs 13 und der bisher erläuterten Ausgestaltung des Einziehverfahrens überein, soweit nachfolgend nicht ausdrücklich auf Unterschiede hingewiesen wird. Bei der Ausgestaltung des Wickelwerkzeugs gemäß den FIG 13 bis 15 sind die Führungsflächen 19 des ersten Stirnteils 15 nicht starr angeordnet, sondern in einem Grundteil 15' des ersten Stirnteils 15 axial verschiebbar gelagert. Insbesondere sind sie dadurch zwischen einer ersten Stellung und einer zweiten Stellung axial verschiebbar. Die erste Stellung ist in FIG 13 dargestellt, die zweite Stellung in den FIG 14 und 15. In der ersten Stellung ragen die Führungsflächen 19 axial aus dem Grundelement 15' heraus. In der zweiten Stellung sind die Führungsflächen 19 in das Grundelement 15' zurückgezogen. Die gleiche Vorgehensweise kann bezüglich der Führungselemente 21 möglich sein.

In der ersten Stellung erfolgen das Wickeln der Wicklungen 9 und das Einführen des Wickelwerkzeugs 13 in das Statorblechpaket 3, also die Abfolge gemäß den FIG 8 bis 11. FIG 13 zeigt diesen Zustand. Im Unterschied zu der zuvor erläuterten Ausgestaltung werden nun aber entsprechend der Darstellung in FIG 14 die Führungsflächen 19 (und gegebenenfalls auch die Führungselemente 21) in die zweite Stellung überführt. Dadurch löst sich das erste Stirnteil 15 bereits vor dem Zurückziehen von den auf das erste Stirnteil 15 gewickelten Wicklungsköpfen 11. Diese Wicklungsköpfe 11 können daher bereits ab diesem Zeitpunkt nach radial außen umgebogen werden. Es ist entsprechend der Darstellung in FIG 15 sogar möglich, nach dem Zurückziehen der Führungsflächen 21 das erste Stirnteil 15 noch weiter durch das Statorblechpaket 3 hindurchzuführen, wobei diese Axialbewegung des ersten Stirnteils 15 bewirkt, dass diese Wicklungsköpfe 11 vollständig oder teilweise nach radial außen umgebogen werden. Erst danach wird das erste Stirnteil 15 durch das Statorblechpaket 3 zurückgezogen.

Zusätzlich ist es möglich, dass entsprechend der Darstellung in FIG 16 in dem Grundkörper 15' Schiebeelemente 15" angeordnet sind. In diesem Fall sind die Schiebeelemente 15" radial verschiebbar gelagert, so dass sie zwischen einer ersten Stellung und einer zweiten Stellung verschoben werden können.

In der ersten Stellung sind die Schiebeelemente 15" zurückgezogen, so dass sie in Radialrichtung nicht über das Grundelement 15' hinausragen. In dieser Stellung erfolgen das Wickeln der Wicklungen 9 und das Einführen des Wickelwerkzeugs 13 in das Statorblechpaket 3, also die Abfolge bis einschließlich FIG 15. Nunmehr werden die Schiebeelemente 15" in die zweite Stellung überführt. In dieser Stellung ragen die Schiebeelemente 15" entsprechend der Darstellung in FIG 16 in Radialrichtung gesehen aus dem Grundelement 15' hinaus. Es ist dadurch entsprechend der Darstellung in FIG 16 möglich, die entsprechenden Wicklungsköpfe elf mittels der Schiebeelemente 15" nach radial außen umzubiegen.

Es ist prinzipiell möglich, alle Phasen des Statorwicklungssystems gleichzeitig in das Statorblechpaket 3 einzubringen. Vorzugsweise werden auf das Wickelwerkzeug 13 jedoch jeweils nur die Wicklungen 9 einer einzigen Phase des Statorwicklungssystems gewickelt. In diesem Fall wird - selbstverständlich - das Einziehverfahren mehrmals ausgeführt, bis die Wicklungen 9 aller Phasen des Statorwicklungssystems in das Statorblechpaket 3 eingezogen sind. Diese Ausgestaltung des Einziehverfahrens weist nicht nur fertigungstechnische Vorteile auf, sondern bietet darüber hinaus auch konstruktive Vorteile für das Wickelwerkzeug 13. Insbesondere ist es in diesem Fall ausreichend, dass die Werkzeugnuten 18 sich tangential nur in vorbestimmten ersten Winkelbereichen 26 befinden, wobei sich zwischen den ersten Winkelbereichen zweite Winkelbereiche 27 befinden, in denen keine Werkzeugnuten angeordnet sind. Die zweiten Winkelbereiche 27 sind in diesem Fall größer als die ersten Winkelbereiche 26. Meist sind die zweiten Winkelbereiche 27 in etwa doppelt so groß wie die ersten Winkelbereiche 26.

Die vorliegende Erfindung weist viele Vorteile auf. Insbesondere kann der Füllgrad der Statornuten 7 maximiert werden. Damit kann gegenüber einer wilden Wicklung bei gleicher Dimensionierung der elektrischen Maschine 1 das Drehmoment erhöht werden bzw. zur Erreichung des gleichen Drehmoments die elektrische Maschine 1 kleiner dimensioniert werden. Die Einziehkräfte sind erheblich kleiner als im Stand der Technik. Eine vollautomatisierte Herstellung - beispielsweise mittels eines Roboters - ist ohne weiteres möglich. Eine etwaige Fertigungsvarianz kann über mehrere Wickelwerkzeuge 13 abgedeckt werden, wobei die Mantellängen der Wickelwerkzeuge 13 und gegebenenfalls auch andere Dimensionierungen der Wickelwerkzeuge 13 entsprechend variieren. Die Notwendigkeit eines glatten Drahtes ist nicht deutlich ausgeprägt, da die Drähte der Wicklungen 9 beim Einziehen relativ zueinander nicht verschoben werden, sondern ihre geometrische Anordnung konstant bleibt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einziehverfahren für ein Statorwicklungssystem einer elektrischen Maschine (1) in ein Statorblechpaket (3) der elektrischen Maschine (1),
- wobei das Statorblechpaket (3) eine Anzahl von Statornuten (7) aufweist, die parallel zu einer Rotationsachse (6) der elektrischen Maschine (1) verlaufen, kreisförmig um die Rotationsachse (6) herum verteilt angeordnet sind und zur Rotationsachse (6) hin offen sind, an ihrem der Rotationsachse (6) zugewandten Ende aber einen gegenüber der übrigen Statornut (7) verjüngten Spaltbereich (8) aufweisen,
- wobei die Wicklungen (9) einer Anzahl von Phasen des Statorwicklungssystems auf ein Wickelwerkzeug (13) gewickelt werden,
- wobei das Wickelwerkzeug (13) Werkzeugnuten (18) zumindest für die Wicklungen (9) einer Anzahl von Phasen aufweist,
- wobei die Werkzeugnuten (18) parallel zu einer Werkzeugachse (17) des Wickelwerkzeugs (13) verlaufen, kreisförmig um die Werkzeugachse (17) herum verteilt angeordnet sind und zur Werkzeugachse (17) hin geschlossen sind,
- wobei die Werkzeugnuten (18) Bestandteil eines Mantelteils (14) des Wickelwerkzeugs (13) sind,
- wobei das Wickelwerkzeug (13) weiterhin ein erstes und ein zweites Stirnteil (15,16) aufweist, die radial zur Werkzeugachse (17) gesehen vollständig innerhalb des Mantelteils (14) angeordnet sind und, von dem Mantelteil (14) geführt, in dem Mantelteil (14) in Richtung der Werkzeugachse (17) verschiebbar sind,
- wobei die beiden Stirnteile (15,16) in Richtung der Werkzeugachse (17) gesehen um eine Verkürzungsstrecke gegeneinander verschiebbar sind, so dass sie in Richtung der Werkzeugachse (17) gesehen zwischen einem kleineren und einem größeren Abstand (a) voneinander verschiebbar sind,
- wobei die Wicklungen (9) der Anzahl von Phasen beim Wickeln auf das Wickelwerkzeug (13) als gelegte Wicklungen gewickelt werden, während die beiden Stirnteile (15,16) den größeren Abstand (a) voneinander aufweisen,
- wobei beim Wickeln der Wicklungen (9) die späteren Wicklungsköpfe (11) der Wicklungen (9) durch Führungsflächen (19,20) der Stirnteile (15,16) radial innerhalb des Mantelelements (14) gehalten werden,
- wobei die Wicklungen (9) in einem Übergangsabschnitt von den in den Werkzeugnuten (18) angeordneten Abschnitten der Wicklungen (9) zu den durch das erste Stirnteil (15) gehaltenen Wicklungsköpfen (11) durch Führungselemente (21) des ersten Stirnteils (15) derart geführt werden, dass sie in Tangentialrichtung um die Werkzeugachse (17) herum gesehen sich über einen geringeren Winkel erstrecken als im Bereich des Mantelteils (14),
- wobei das Wickelwerkzeug (13) mit den darauf befindlichen Wicklungen (9) derart angeordnet wird, dass die Werkzeugachse (17) mit der Rotationsachse (6) fluchtet, die Werkzeugnuten (18) sich in Radialrichtung und Tangentialrichtung an den gleichen Stellen befinden wie diejenigen der Statornuten (7), in welche die auf das Wickelwerkzeug (13) gewickelten Wicklungen (9) eingebracht werden sollen, und das erste Stirnteil (15) in das Statorblechpaket (3) hineinragt,
- wobei in diesem Zustand die Stirnteile (15,16) in Richtung der Werkzeugachse (17) verschoben werden,
- wobei zunächst die beiden Stirnteile (15,16) relativ zueinander verschoben werden, so dass sie nach dem Verschieben den kleineren Abstand voneinander aufweisen, und während des Verschiebens der beiden Stirnteile (15,16) relativ zueinander das zweite Stirnteil (16) sich von den auf das zweite Stirnteil (16) gewickelten Wicklungsköpfen (11) löst,
- wobei sodann das erste Stirnteil (15) in Richtung der Rotationsachse (6) durch das Statorblechpaket (3) hindurch geschoben wird und durch das Schieben der Stirnteile (15,16)
-- die Wicklungen (9) als gelegte Wicklungen in die entsprechenden Statornuten (7) eingezogen werden, wobei die Wicklungen (9) sich während des Einziehvorgangs mit ihren Übergangsabschnitten in den Spaltbereichen (8) der Statornuten (7) befinden, und
-- die vom zweiten Stirnteil (16) gelösten Wicklungsköpfe (11) durch am Mantelteil (14) angeordnete Führungsschrägen (24) nach radial außen geführt werden und sodann radial außen am Mantelteil (14) entlang auf das Statorblechpaket (3) zu gleiten,
- wobei sodann mit oder ohne Überführen der beiden Stirnteile (15,16) in den größeren Abstand (a) zueinander das erste Stirnteil (15) durch das Statorblechpaket (3) zurückgezogen wird,
- wobei das erste Stirnteil (15) sich vor oder während des Zurückziehens von den auf das erste Stirnteil (15) gewickelten Wicklungsköpfen (11) löst,
- wobei die vom ersten Stirnteil (15) gelösten Wicklungsköpfe (11) nach radial außen umgebogen werden.

2. Einziehverfahren nach Anspruch 1, **dadurch ge-kennzeichnet,** dass die Führungsflächen (19) des ersten Stirnteils (15) in einem Grundteil (15') des ersten Stirnteils (15) axial verschiebbar gelagert sind, so dass sie zwischen einer ersten Stellung, in welcher sie in Richtung der Werkzeugachse (17) gesehen aus dem Grundelement (15') axial herausragen, und einer zweiten Stellung, in welcher sie in Richtung der Werkzeugachse (17) gesehen in das Grundelement (15') zurückgezogen sind, verschoben werden können, und dass die Führungsflächen (19) des ersten Stirnteils (15) nach dem Schieben des ersten Stirnteils (15) durch das Statorblechpaket (3) hindurch von der ersten in die zweite Stellung überführt werden und dadurch die dortigen Wicklungsköpfe (11) noch vor dem Zurückziehen des ersten Stirnteils (15) von dem ersten Stirnteil (15) freigegeben werden.

3. Einziehverfahren nach Anspruch 2, **dadurch ge-kennzeichnet,** dass in dem Grundkörper (15') Schiebeelemente (15") radial verschiebbar gelagert sind, so dass sie zwischen einer ersten Stellung, in welcher sie orthogonal zur Werkzeugachse (17) gesehen in das Grundelement (15') zurückgezogen sind, und einer zweiten Stellung, in welcher sie orthogonal zur Werkzeugachse (17) gesehen aus dem Grundelement (15') radial herausragen, verschoben werden können, und dass die zunächst auf die Führungsflächen (19) des ersten Stirnteils (15) gewickelten Wicklungsköpfe (11) mittels der Schiebeelemente (15") nach radial außen umgebogen werden.

4. Einziehverfahren nach Anspruch 3, **dadurch ge-kennzeichnet,** dass auf das Wickelwerkzeug (13) jeweils nur die Wicklungen (9) einer einzigen Phase des Statorwicklungssystems gewickelt werden und dass das Einziehverfahren von Anspruch 1 mehrmals ausgeführt wird, bis die Wicklungen (9) aller Phasen des Statorwicklungssystems in das Statorblechpaket (3) eingezogen sind.

5. Wickelwerkzeug für ein Statorwicklungssystem einer elektrischen Maschine (1),
- wobei das Wickelwerkzeug Werkzeugnuten (18) zumindest für die Wicklungen (9) einer Anzahl von Phasen des Statorwicklungssystems aufweist,
- wobei die Werkzeugnuten (18) parallel zu einer Werkzeugachse (17) des Wickelwerkzeugs verlaufen, kreisförmig um die Werkzeugachse (17) herum verteilt angeordnet sind und zur Werkzeugachse (17) hin geschlossen sind,
- wobei die Werkzeugnuten (18) Bestandteil eines Mantelteils (14) des Wickelwerkzeugs sind,
- wobei das Wickelwerkzeug weiterhin ein erstes und ein zweites Stirnteil (15,16) aufweist, die radial zur Werkzeugachse (17) gesehen vollständig innerhalb des Mantelteils (14) angeordnet sind und, von dem Mantelteil (14) geführt, in dem Mantelteil (14) in Richtung der Werkzeugachse (17) verschiebbar sind,
- wobei die beiden Stirnteile (15,16) in Richtung der Werkzeugachse (17) gesehen um eine Verkürzungsstrecke gegeneinander verschiebbar sind, so dass sie in Richtung der Werkzeugachse (17) gesehen zwischen einem kleineren und einem größeren Abstand (a) voneinander verschiebbar sind,
- wobei die Stirnteile (15,16) Führungsflächen (19,20) aufweisen, mittels derer beim Wickeln der Wicklungen (9) die späteren Wicklungsköpfe (11) der Wicklungen (9) radial innerhalb des Mantelelements (14) gehalten werden,
- wobei das erste Stirnteil (15) Führungselemente (21) aufweist, mittels derer die Wicklungen (9) in einem Übergangsabschnitt von den in den Werkzeugnuten (18) angeordneten Abschnitten der Wicklungen (9) zu den durch das erste Stirnteil (15) gehaltenen Wicklungsköpfen (11) derart geführt werden, dass sie in Tangentialrichtung um die Werkzeugachse (17) herum gesehen sich über einen geringeren Winkel erstrecken als im Bereich des Mantelteils (14),
- wobei am Mantelteil (14) Führungsschrägen (24) angeordnet sind, durch welche die auf das zweite Stirnteil (16) gewickelten Wicklungsköpfe (11) nach dem Lösen vom zweiten Stirnteil (16) nach radial außen geführt werden, so dass sie danach radial außen am Mantelteil (14) entlang auf das Statorblechpaket (3) zu gleiten können.

6. Wickelwerkzeug nach Anspruch 5, **dadurch ge-kennzeichnet,** dass die Führungsflächen (19) des ersten Stirnteils (15) in einem Grundteil (15') des ersten Stirnteils (15) axial verschiebbar gelagert sind, so dass sie zwischen einer ersten Stellung, in welcher sie in Richtung der Werkzeugachse (17) gesehen aus dem Grundelement (15') axial herausragen, und einer zweiten Stellung, in welcher sie in Richtung der Werkzeugachse (17) gesehen in das Grundelement (15') zurückgezogen sind, verschoben werden können.

7. Wickelwerkzeug nach Anspruch 6, **dadurch gekennzeichnet, dass** in dem Grundkörper (15') Schiebeelemente (15") radial verschiebbar gelagert sind, so dass sie zwischen einer ersten Stellung, in welcher sie orthogonal zur Werkzeugachse (17) gesehen in das Grundelement (15') zurückgezogen sind, und einer zweiten Stellung, in welcher sie orthogonal zur Werkzeugachse (17) gesehen aus dem Grundelement (15') radial herausragen, verschoben werden können.

8. Wickelwerkzeug nach Anspruch 5, 6 oder 7, **dadurch gekennzeichnet, dass** die Werkzeugnuten (18) von der Werkzeugachse (17) ausgesehen sich in Tangentialrichtung in vorbestimmten ersten Winkelbereichen (26) befinden, zwischen denen sich zweite Winkelbereiche (27) befinden, in denen keine Werkzeugnuten angeordnet sind, und dass die zweiten Winkelbereiche (27) größer als die ersten Winkelbereiche (26) sind.

9. Elektrische Maschine,
- wobei die elektrische Maschine ein Statorblechpaket (3) aufweist,
- wobei das Statorblechpaket (3) eine Anzahl von Statornuten (7) aufweist, die parallel zu einer Rotationsachse (6) der elektrischen Maschine verlaufen, kreisförmig um die Rotationsachse (6) herum verteilt angeordnet sind und zur Rotationsachse (6) hin offen sind, an ihrem der Rotationsachse (6) zugewandten Ende aber einen gegenüber der übrigen Statornut (7) verjüngten Spaltbereich (8) aufweisen,
- wobei in den Statornuten (7) die Wicklungen (9) eines Statorwicklungssystems angeordnet sind,
- wobei Wicklungsköpfe (11) des Statorwicklungssystems in Richtung der Rotationsachse (6) gesehen an den beiden axialen Enden des Statorblechpakets (3) über das Statorblechpaket (3) hinausragen,
- wobei die Wicklungen (9) in den Statornuten (7) als gelegte Wicklungen ausgebildet sind und
- wobei das Statorblechpaket (3) an seinen beiden axialen Enden keine Führungsstrukturen aufweist, insbesondere keine auf Endscheiben angeordnete Führungsstrukturen, mittels derer die einzelnen Windungen (10) der Wicklungen (9) geführt werden könnten.
